(19) Europäisches Patentamt
European Patent Office
Office européen des brevets

(11) **EP 3 673 286 B1**

(12) # EUROPEAN PATENT SPECIFICATION

(45) Date of publication and mention
of the grant of the patent:
**24.03.2021 Bulletin 2021/12**

(51) Int Cl.:
**G01S 7/00** *(2006.01)*          **G01S 7/35** *(2006.01)*
**G01S 13/34** *(2006.01)*

(21) Application number: **17761059.9**

(22) Date of filing: **24.08.2017**

(86) International application number:
**PCT/EP2017/071357**

(87) International publication number:
**WO 2019/037857 (28.02.2019 Gazette 2019/09)**

(54) **AN INTEGRATED WIRELESS COMMUNICATION AND RADAR SYSTEM**

INTEGRIERTES DRAHTLOSES KOMMUNIKATIONS- UND RADARSYSTEM

SYSTÈME DE COMMUNICATION SANS FIL ET DE RADAR INTÉGRÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.07.2020 Bulletin 2020/27**

(73) Proprietor: **Telefonaktiebolaget LM Ericsson
(publ)
164 83 Stockholm (SE)**

(72) Inventors:
• **BAO, Mingquan
426 54 Västra Frölunda (SE)**
• **EMANUELSSON, Thomas
426 68 Västra Frölunda (SE)**

(74) Representative: **Ericsson
Patent Development
Torshamnsgatan 21-23
164 80 Stockholm (SE)**

(56) References cited:
**EP-A1- 1 936 401     US-A1- 2007 096 885**

• **SCHEIBLHOFER WERNER ET AL: "Method to
embed a data-link on FMCW chirps for
communication between cooperative 77-GHz
radar stations", 2015 EUROPEAN RADAR
CONFERENCE (EURAD), EUMA, 9 September
2015 (2015-09-09), pages 181-184, XP032824533,
DOI: 10.1109/EURAD.2015.7346267 [retrieved on
2015-12-02]**

## Description

TECHNICAL FIELD

Embodiments herein relate to an integrated wireless communication and radar system. In particular, they are an integrated wireless communication and radar system for operating radar and communication mode simultaneously.

BACKGROUND

A wireless communication transceiver and a radar sensor may be integrated. Such kind systems are applicable in vehicle-to-vehicle communication and distance/speed measurements, as well as in unmanned aerial vehicles-to-vehicle, e.g. drone communication and distance/speed measurements. A group of drones can work together to collect information and to monitor a certain area. The communication and distance measurement become important. Furthermore, due to limited weight and space for a drone, margining radar and communication system is desired.

A group of sensors, for instance to monitor temperature/smoke/moisture, etc. in an open field, need a communication network and a positioning network, the distance measurement system between sensors can provide a position or a relative position information, to replace Global Positioning System (GPS) or act as a backup GPS.

In health-care and wearable health-care system for obtaining and transmitting vital signs from sensors to repositories or other units. Several approaches have been applied to realize the dual functions system.

In CN 105182323, a ZigBee communication module are added in a radar system. So the communication system and radar system are independent. The chip area and DC power consumption are probably larger than other integrated solutions

SCHEIBLHOFER WERNER ET AL: "Method to embed a data-link on FMCW chirps for communication between cooperative 77-GHz radar stations" discloses a combined radar and communication, ranging data using FMCW, on top of which a FSK modulation is added for communication.

In G.N. Saddik, R.S. Singh, E.R. Brown, "Ultra-wideband multifunctional communications/radar system", IEEE Trans. Microw. Theory Tech., 2007, 55, (7), pp. 1431-1437, a pulse radar signal and a pulse communication signal are transmitted and received in the same platform. To compress the pulses, a up-chirp and a down-chirp linear frequency modulation are used for the radar signal and the communication signal, respectively. Furthermore, the transmitted waves, i.e. the radar and communication signals, are right-hand circularly polarised (RHCP). The communication receiver receives only RHCP signal, and the radar receiver receives only left-hand circularly polarised (LHCP) signal since the reflection of the radar signal changes the rotation direction. The isolation of the different polarizations is utilized to separate the radar and communication signal at the receivers. However, the pulse radar is often expensive in manufacture and maintenance, comparing with a frequency modulated continuous wave (FMCW) radar.

Time-domain duplex is also used in prior art for integrating radar and wireless communication transceiver. These systems work alternately in the radar mode and communication mode. In the communication mode, different kinds of modulation are applicable, for instance, a BPSK and QPSK modulations, an ultra-wide band (UWB) frequency modulation, a FSK modulation etc. In the radar mode, different kinds of frequency modulations are utilized for radar waves too. For example, a continuous linear frequency modulate radar wave, a stepped frequency modulated radar wave etc.. In a so-called FSK radar, transmitter sends out two frequencies signals in an intertwined sequence. However, in these solutions, it does not allow the radar and communication operating simultaneously. Thus, the capability of the communication is reduced, and the radar measurement is discontinuous.

SUMMARY

Therefor it is an object of embodiments herein to provide an integrated wireless communication and radar system with improved performance.

According to a first aspect of embodiments herein, the object is achieved by an integrated wireless communication and radar system for operating radar and communication mode simultaneously. The system comprises a transmitter configured to transmit a chirped FSK modulated signal for both communication and radar measurement, where communication data, represented by a binary sequence, and a chirp radar signal, e.g. a frequency modulated sawtooth wave signal, are combined to form the chirped FSK modulated signal. The transmitter comprises an encoder for encoding the communication data such that a number of data with value "1" is equal to a number of data with value "0" in the encoded communication data.

The system further comprises a receiver configured to receive a first chirped FSK modulated signal reflected from a reflector and a second chirped FSK modulated signal transmitted from other wireless communication and radar system.

The receiver comprises a communication receiver and a radar receiver.

The radar receiver is configured to filter-out the communication signal in the first chirped FSK modulated signal to obtain a radar signal for distance and/or speed measurement. The communication receiver is configured to demodulate the second chirped FSK modulated signal and obtain the communication data.

According to a second aspect of embodiments herein, the object is also achieved by a transmitter for operating radar and communication mode simultaneously. The transmitter comprises an encoder for encoding communication data represented by a binary sequence such that a number of data with value "1" is equal to a number of data with value "0" in the encoded communication data. The transmitter is configured to combine the encoded communication data and a chirp radar signal to form a chirped FSK modulated signal and transmit the chirped FSK modulated signal for both communication and radar measurement.

According to a third aspect of embodiments herein, the object is achieved by a method performed in an integrated wireless communication and radar system for operating radar and communication mode simultaneously. The integrated wireless communication and radar system encodes communication data represented by a binary sequence such that a number of data with value "1" is equal to a number of data with value "0" in the encoded communication data. The integrated wireless communication and radar system generates a chirped FSK modulated signal from the encoded communication data and a chirp radar signal. Then the integrated wireless communication and radar system transmits the chirped FSK modulated signal for both communication and radar measurement.

In another words, according to the embodiments herein, a wireless communication using chirped FSK modulation and a FMCW radar system are integrated in a single system. A chirped FSK modulated signal is used for both communication and radar measurement, where communication data, represented by a binary sequence, and a chirp radar signal are combined to form the chirped FSK modulated signal. The chirped FSK signal may be generated by a single sideband mixer. The encoder, e.g. a so-called 8-bit to 10-bit encoder, encodes the communication data such that a number of data with value "1" is equal to a number of data with value "0" in the encoded communication data. Consequently, the FSK signal may be removed in the radar receiver by averaging the FSK pulse's frequencies in time domain. In the communication receiver, the chirped FSK signal may be demodulated by mixing the received chirped FSK signal send by other integrated wireless communication and radar system with a sawtooth wave synchronized to the received signal, and then using a conventional FSK demodulator. The communication data may be then obtained after decoding, e.g. an 8-bit to 10-bit decoding.

In this way, the wireless communication and radar sensor may work simultaneously, thus, the communication capability, e.g. data rate, is improved, comparing with the time-domain duplex solution. While, the distance/speed measurements can be carried out continuously. In the radar receiver, the wireless communication signal is removed in digital domain with a simple average algorithm. This solution is much simpler than the transceiver with circularly polarized microwave. Furthermore, both wireless communication transceiver and radar sensor operate in the same frequency band, so they may share the same packaging, antennas, as well as a part of microwave circuits, e.g., a power amplifier, a low noise amplifier etc..

Thus, embodiments herein provide an improved communication and radar system which can operate in radar and communication mode simultaneously.


BRIEF DESCRIPTION OF THE DRAWINGS

Examples of embodiments herein are described in more detail with reference to attached drawings in which:

Figure 1    is a general view of an integrated wireless communication and radar system according to the embodiments herein;

Figure 2    is a block diagram of a transmitter according to embodiments herein;

Figure 3    is a diagram illustrating a frequency modulated sawtooth signal in time-domain;

Figure 4    is a diagram illustrating a chirped FSK modulated signal (not to scale);

Figure 5    is a block diagram of a radar receiver according to embodiments herein;

Figure 6    is a diagram illustrating a reflected wave and a frequency modulated sawtooth wave at the radar receiver (not to scale);

Figure 7    is a block diagram of an image reject mixer (IRM) according to embodiments herein;

Figure 8    are diagrams showing (a) a sawtooth wave and a reflected wave; (b) lower sideband output of the IRM in Figure 7 (not to scale);

Figure 9    are diagrams showing (a) a sawtooth wave and a reflected wave; (b) lower sideband output, and (c) up sideband output of the IRM in Figure 7 (not to scale);

Figure 10   are diagrams showing a reflected radar signal, received communication signal, and a synchronized sawtooth wave in time-domain (not to scale) with different delay times $T_{d0}$ to the input sawtooth wave (a) $T_{d0}=0$ and (b) $T_{d0} \neq 0$;

Figure 11   is a block diagram of a communication receiver according to embodiments herein;

Figure 12    is a block diagram of a FSK demodulator;

Figure 13    is a flow chart illustrating a method performed in an integrated wireless communication and radar system according to embodiments herein;

Figure 14    is a block diagram illustrating an electronic device in which embodiments herein may be implemented.

DETAILED DESCRIPTION

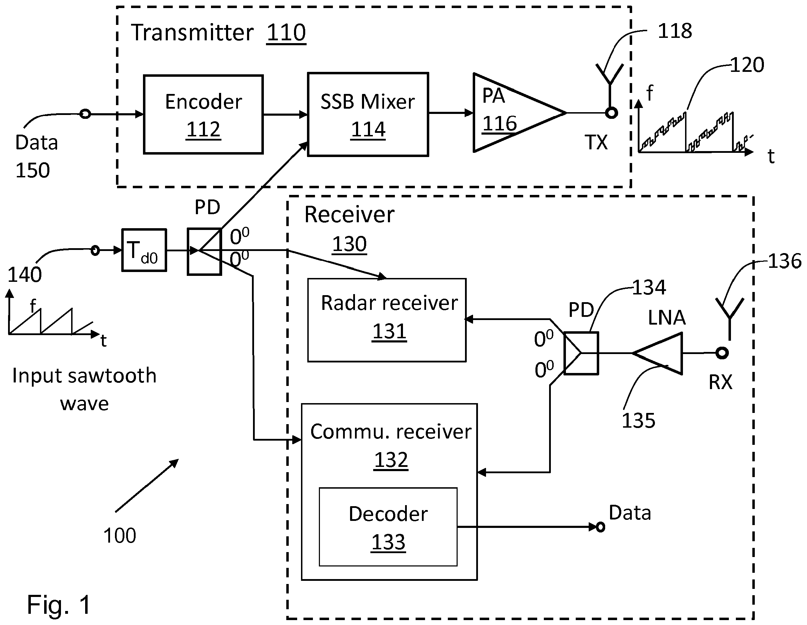

An integrated wireless communication and radar system **100,** i.e. a chirped FSK wireless transceiver and a FMCW radar sensor are integrated in a single system, for operating radar and communication mode simultaneously, is shown in **Figure 1.**

The integrated wireless communication and radar system 100 comprises a transmitter **110** configured to transmit a chirped FSK modulated signal **120** for both communication and radar measurement. Communication data, represented by a binary sequence, and a chirp radar signal are combined to form the chirped FSK modulated signal 120.

The communication/radar signal transmitter 110 comprises an encoder **112** for encoding the communication data such that a number of data with value "1" is equal to a number of data with value "0" in the encoded communication data.

The system 100 further comprises a receiver **130** configured to receive a first chirped FSK modulated signal reflected from a reflector and a second chirped FSK modulated signal transmitted from other wireless communication and radar system.

The receiver 130 comprises a radar receiver **131** and a communication receiver **132.**

The radar receiver 131 is configured to filter-out the communication signal in the first chirped FSK modulated signal to obtain a radar signal for distance and/or speed measurement. The communication receiver 132 is configured to demodulate the second chirped FSK modulated signal and obtain the communication data. To decode the encoded communication data, the communication receiver 132 may further comprises a decoder **133** corresponding to the encoder 112 in the transmitter 110.

The inputs for the communication/radar signal transmitter 110 are: an input frequency modulated sawtooth wave **140,** i.e. a linear frequency modulated signal or a chirp signal with a tunable delay time $T_{d0}$, and communication data **150.**

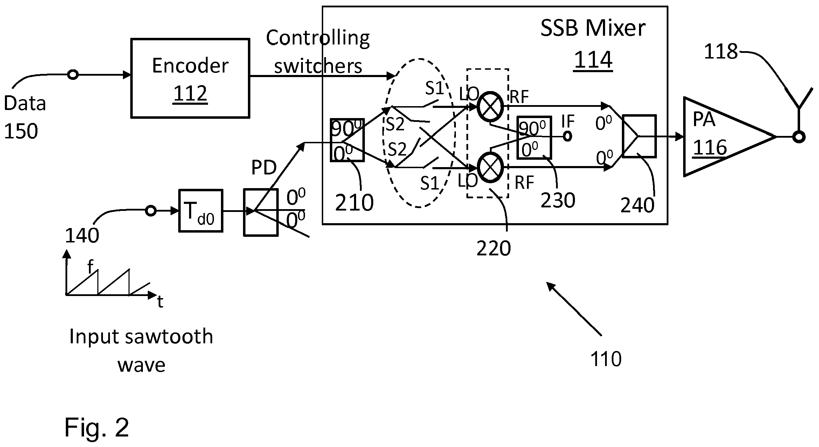

According to some embodiments herein, the transmitter further comprises a single sideband mixer configured to generate the chirped FSK modulated signal. **Figure 2** shows the transmitter 110 with an example single sideband mixer 114.

As shown in Figure 2, the single sideband mixer 114 comprises a first 90-degree hybrid **210** configured to receive the input sawtooth wave 140 and generate quadrature local oscillator signals **LO.**

The single sideband mixer 114 further comprises two pairs of switchers **S1, S2** coupled to outputs of the first 90-degree hybrid 210.

The single sideband mixer 114 further comprises two double side band mixers **220** coupled to the outputs of the first 90-degree hybrid 210 through the two pairs of switchers S1, S2. The states of the two pairs of switchers S1, S2 are controlled by the encoded communication data to exchange phases of the quadrature local oscillator signals to drive the two double side band mixers 220.

The single sideband mixer 114 further comprises a second 90-degree hybrid **230** configured to receive an intermediate frequency **IF** signal and generate quadrature IF signals for the two double side band mixers 220.

The single sideband mixer 114 further comprises a power combiner **240** coupled to outputs of the two double side band mixers 220 to combine the outputs of the two double side band mixers and thereby generate the chirped FSK modulated signal 120.

The transmitter may further comprise a power amplifier PA **116** to amplifier the chirped FSK modulated signal and an antenna **118** to transmit the chirped FSK modulated signal.

In the following, the principle of generating the chirped FSK modulated signal 120 in the transmitter 110 will be explained in detail.

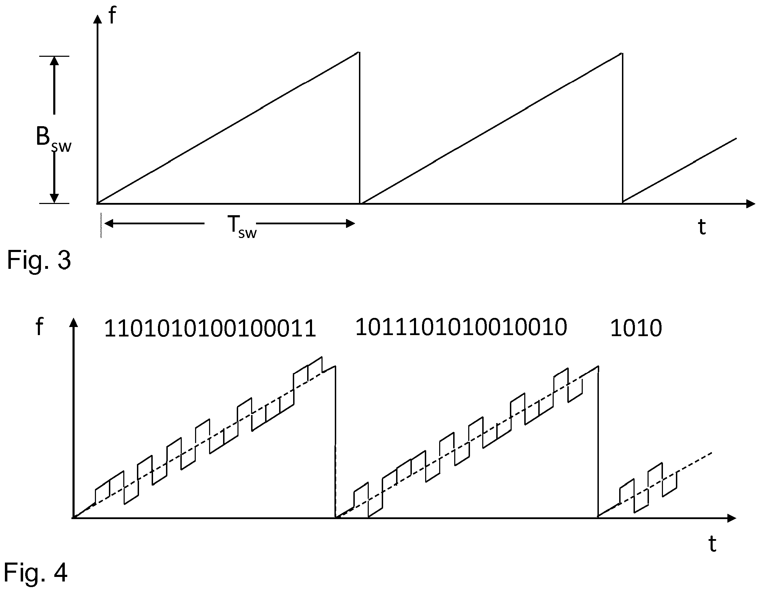

The frequency modulated sawtooth signal 140, as shown in **Figure 3,** has a fixed amplitude. Its frequency is changed periodically. The period of the sawtooth wave is $T_{sw}$. The frequency sweep bandwidth is $B_{sw}$. The frequency sloop, i.e., chirp-rate, is defined as $k = B_{sw}/T_{sw}$. The instantaneous frequency, $f_R + \frac{k}{2}t$, is called as a radar frequency. The IF signal input to the mixer has a constant frequency $f_{IF}$. The radar frequency is much larger than the IF frequency $f_{IF}$. For instance, the radar frequency may be around 60 GHz or even above 100 GHz, while an IF frequency may be 10 MHz. The tunable delay $T_{d0}$ controls the starting time of the sawtooth wave 140 for the anti-interference purpose which will be explained later.

The communication data 150 to be transmitted is encoded firstly in the encoder 112, for example by an 8-bit-to-10-bit (8b/10b) encoder. The "8b/10b" encoding maps 8-bit words to 10-bit symbols, to make the number of "1" equal to the number of "0" in the encoded data. The details of 8b/10b encoder and decoder may be found in prior art.

The encoded data controls the switchers S1 and S2 either "on" or "off", to generate chirped FSK pulses via the single sideband mixer 114. As described above, this mixer 114 may comprise two 90 hybrids 210, 230, two double side band (DSB) mixers 220, a power combiner 240, as well as the switchers S1 and S2 to exchange the phases ($\pm90°$) of the sawtooth wave 140, acting as LO signals, for the two DSB mixers 220.

In the following, it is explained how the phase of the sawtooth wave changes the frequency of the output signal.

The input sawtooth wave and the input IF wave can be represented by equations:

$$y_R(t) = A_R \cos\left(2\pi\left(f_R t + \frac{k}{2}t^2\right) + \varphi_R\right)$$

$$y_{IF}(t) = A_{IF}\cos(2\pi f_{IF}t + \varphi_{IF})$$

where $\varphi_R$ and $\varphi_{IF}$ are the phase of the sawtooth and IF wave, respectively; $A_R$ and $A_{IF}$ are amplitudes of two waves.

A single DSB mixer's output is given by

$$y(t) = \frac{A_R A_{IF}}{2}\left\{\cos\left[2\pi\left(f_R + \frac{k}{2}t + f_{IF}\right)t + \varphi_R + \varphi_{IF}\right] + \cos\left[2\pi\left(f_R + \frac{k}{2}t - f_{IF}\right)t + \varphi_R - \varphi_{IF}\right]\right\} \quad (1)$$

It can be seen from the above equation, for the mixing component at frequency $(f_R + \frac{k}{2}t + f_{IF})$, the phase is equal to $\varphi_R + \varphi_{IF}$; while, for the mixing component at frequency $(f_R + \frac{k}{2}t - f_{IF})$, the phase is equal to $\varphi_R - \varphi_{IF}$. When combining two identical DSB mixers' output, the mixing component at frequency $(f_R + \frac{k}{2}t + f_{IF})$ or at frequency $(f_R + \frac{k}{2}t - f_{IF})$ can be either enhanced, i.e. adding in-phase or suppressed, i.e. adding anti-phase by controlling phase $\varphi_R$ and $\varphi_{IF}$.

When the switcher S1 is "on" and S2 is "off", the mixer generates a chirped FSK pulse with a frequency equal to $(f_R + \frac{k}{2}t - f_{IF})$. The mixing component at frequency $(f_R + \frac{k}{2}t - f_{IF})$ has a phase equal to $\varphi_R - \varphi_{IF} = 90^0 - 90^0 = 0$ for the up DSB mixer, and $\varphi_R - \varphi_{IF} = 0^0 - 0^0 = 0$ for the lower DSB mixer. Therefore, the frequency components $(f_R + \frac{k}{2}t - f_{IF})$ obtained from two DSB mixers are added in-phase at the output of the power combiner 240. Simultaneously, the DSB mixer generates also mixing component at frequency $(f_R + \frac{k}{2}t + f_{IF})$. The component at frequency $(f_R + \frac{k}{2}t + f_{IF})$ has a phase equal to $\varphi_R + \varphi_{IF} = 90^0 + 90^0 = 180^0$ for the up DSB mixer, and $\varphi_R + \varphi_{IF} = 0^0 + 0^0 = 0^0$ for the lower DSB mixer, therefore, the components at frequency $(f_R + \frac{k}{2}t + f_{IF})$ obtained from two DSB mixers are added anti-phase at the output of the power combiner 240, consequently, the component $(f_R + \frac{k}{2}t + f_{IF})$ is suppressed.

When the switcher S1 is "off" and S2 is "on", the phases of the sawtooth wave 140 for the two DSB mixers 220 are exchanged, which results in the mixing components at frequency $(f_R + \frac{k}{2}t + f_{IF})$ from two DSB mixers are added in-phase, and the mixing components at frequency $(f_R + \frac{k}{2}t - f_{IF})$ are added anti-phase. Thus, at the output of the power combine 240, the mixing component at frequency $(f_R + \frac{k}{2}t + f_{IF})$ is dominated, the component at frequency $(f_R + \frac{k}{2}t - f_{IF})$ is suppressed.

The communication data "0" and "1" are represented by a chirped FSK pulses at frequency $(f_R + \frac{k}{2}t - f_{IF})$ and $(f_R + \frac{k}{2}t + f_{IF})$, respectively. For example, a data sequence 1101010100100011 1011101010010010 1010, will be represented by a FSK pulse sequence, as shown in **Figure 4.** The chirped FSK pulse sequence will be amplified and transmitted via an antenna.

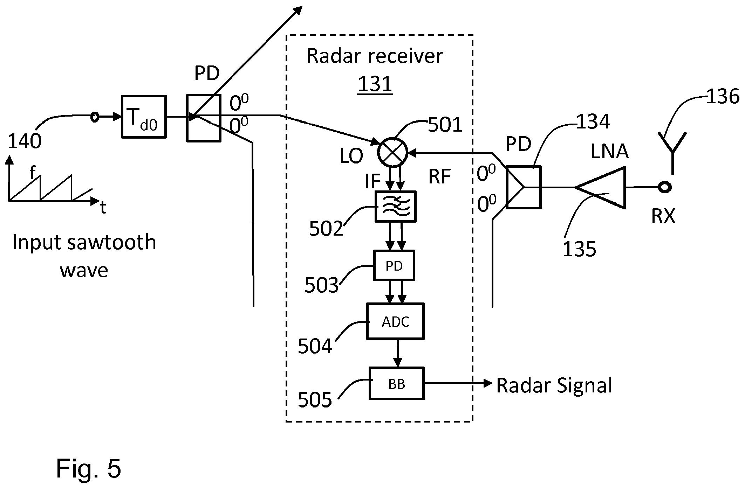

**Figure 5** shows an example of the radar receiver 131. For a conventional FMCW radar, the reflected signal is a sawtooth wave too, the frequency difference $\Delta f = k\tau$ between the transmitted and received sawtooth waves is related to the time-of-flight, $\tau$, i.e., the two-way travel time of the microwave from a radar to a reflector. The distance R between the radar and the reflector is obtained, $R = \frac{c}{2k}\Delta f$, where, c is the speed of light in the air. If the reflector and radar moves relatively, the relative speed can also be found by looking at the frequency spectrum of the reflect signal over several consecutive periods.

The radar receiver 131 comprises an image reject mixer (IMR) **501** configured to mix the received chirped FSK modulated signal with the input sawtooth wave 140.

The radar receiver further comprises a low pass filter **502,** a power detector **PD 503,** an analog-to-digital converter **ADC 504** and a baseband processor **BB 505.**

The encoded communication data is removed by averaging frequencies of FSK pulses in time domain in the baseband processor 505.

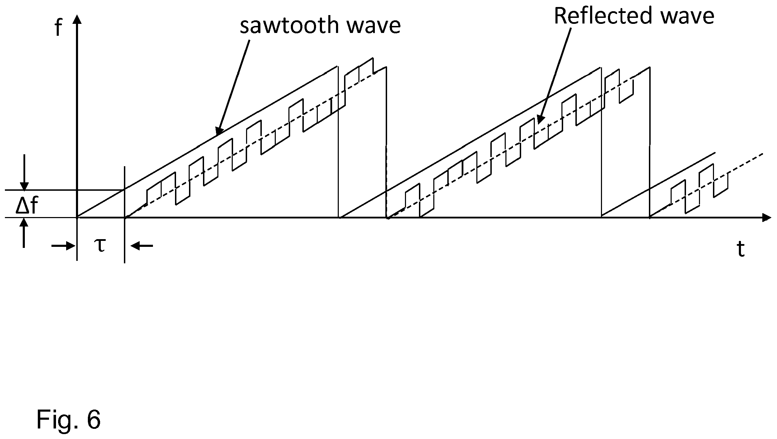

In the following, how to demodulate the reflected chirped FSK modulated signal and remove the communication data will be explained. For the integrated communication and radar system 100 according to the embodiments herein, the reflected chirped FSK modulated signal contains the FSK signal too, as shown in **Figure 6.** By down-convert mixing the sawtooth wave 140 and the reflected chirped FSK modulated signal, the linear frequency modulation, i.e. frequency ramp, disappears, but the FSK signal remains. The IF frequency for the *i*-th pulse $If_i$, *i*=1,2,3.., are given by

$$If_i = \Delta f \pm f_{IF} \quad (2)$$

The average of $\Delta f_i$ is given by

$$If_{ave} = \frac{1}{n}\sum_{i=1}^{n} If_i = \frac{1}{n}\left\{\sum_{i=1}^{l}(\Delta f + f_{IF}) + \sum_{i=1}^{m}(\Delta f - f_{IF})\right\} \quad (3)$$

where *l* and *m* are the number of pulse at frequency $\Delta f - f_{IF}$ and $\Delta f + f_{IF}$, respectively, and *n=l+m* is total number of pulses. When *l=m,* yield

$$If_{ave} = \Delta f \quad (4)$$

After the 8b/10b encoding, *l=m,* and the frequency difference $\Delta f$ is equal to the average of $If_i$ of the pulses.

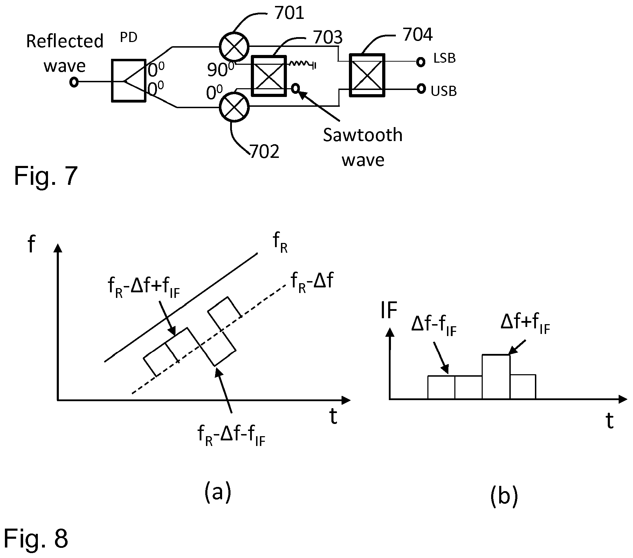

$\Delta f + f_{IF}$ is always large than 0, but $\Delta f - f_{IF}$ may be either larger or less than 0. The "sign" of the second term $\Delta f - f_{IF}$ in the right side of the equation (3) need to be known. A so-called image reject mixer (IRM) 501, as shown in **Figure 7,** may be used to solve the problem of "sign". The IRM 501 comprises two DSB mixers **701, 702,** two 90 hybrids **703, 704.** One input to IRM 501 is the sawtooth wave 140 at frequency $f_R + \frac{k}{2}t$, acting as a LO signal. Another input is the received reflection wave at frequency $f_R + \frac{k}{2}t - \Delta f \pm f_{IF}$, acting as the RF signal. The IRM 501 has two outputs, i.e., the up/lower sideband output **USB/LSB.** When the RF frequency is larger than the LO frequency, the up sideband has IF signal and the lower sideband has no output signal. When the RF frequency is smaller than the LO frequency, the lower sideband has IF signal and the up sideband has not output.

If the average frequency $\Delta f$ is larger than $f_{IF}$, see **Figure 8(a)**, $-\Delta f + f_{IF} < 0$. "sign" of the term ($\Delta f - f_{IF}$) is negative. The up sideband output has no IF component signal; while, the lower sideband output has output, because of ($\Delta f \pm f_{IF}$) > 0, as shown in **Figure 8(b).** After low-pass filtering, analog-to-digital converting (ADC), as well as estimating frequency of each pulses, the $\Delta f_{ave}$ is obtained by average.

$$If_{ave} = \frac{1}{l}\sum_{i=1}^{l}(\Delta f + f_{IF}) + \frac{1}{m}\sum_{i=1}^{m}(\Delta f - f_{IF}) = \Delta f \quad \text{when } l=m, f_{IF} < \Delta f_{ave} \quad (5a)$$

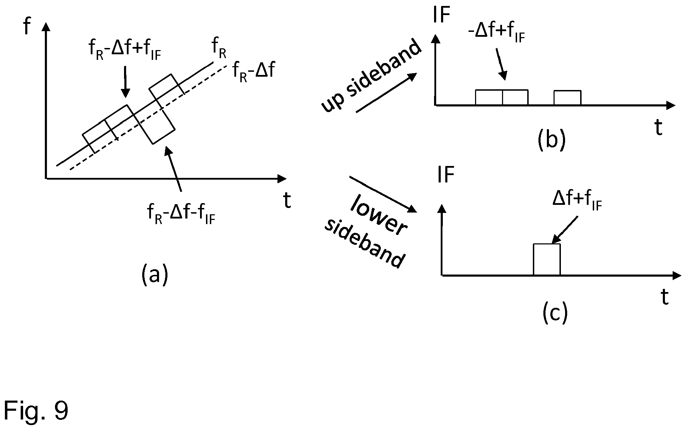

However, if the average frequency $\Delta f$ is smaller than $f_{IF}$, see **Figure 9(a)**, $-\Delta f + f_{IF} > 0$. "sign" of the term $-\Delta f + f_{IF}$ is positive. The up sideband output has an IF signal at frequency $-\Delta f + f_{IF}$. Simultaneously, the lower sideband output has an IF signal at frequency $\Delta f + f_{IF}$, as shown in **Figure 9(b)** and **9(c).** The $\Delta f_{ave}$ is obtained by the difference of the

6

average frequency for the lower sideband output and the average frequency for the up sideband output:

$$\Delta f_{ave} = \frac{1}{l}\sum_{i=1}^{l}(\Delta f + f_{IF}) - \frac{1}{m}\sum_{i=1}^{m}(-\Delta f + f_{IF}) = \Delta f \quad \text{when } l=m,\ f_{IF} > \Delta f_{ave} \quad (5b)$$

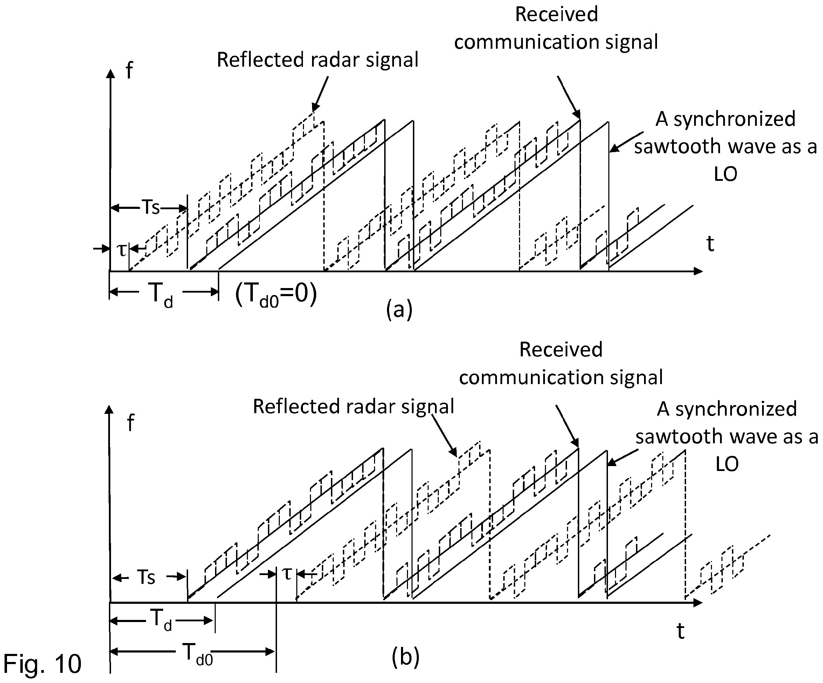

The integrated wireless communication and radar system receives not only the reflected signal, but also communication signal from another radar integrated wireless communication and radar system, as shown in **Figure 10(a).** The communication signal maybe a potential interferer for the radar measurement. The received communication signal and the reflected signal has a relative phase $T_s$-$\tau$ second. If $T_s$ is very small, the frequency difference between the communication and reflection signals is probably within the IF band of the radar receiver, then, the communication signal will interfere the radar receiver.

Even though the relative phase $T_s$, of the received communication signal is unchangeable, the delay time of the input sawtooth wave $T_{d0}$ may be tuned, see **Figure 10(b).** The relative phase between the reflected signal and received communication signal $T_{d0}$+$\tau$-$T_s$ may be increased, so that the frequency difference between the communication signal and the reflected signal is outside the IF band of the radar receiver, consequently, the interference signal may be filtered out by a low-pass filter. By the way, such kind of interference exists between automotive FMCW radars, even though the transmitted/received radar signal is not a chirped FSK modulated signal.

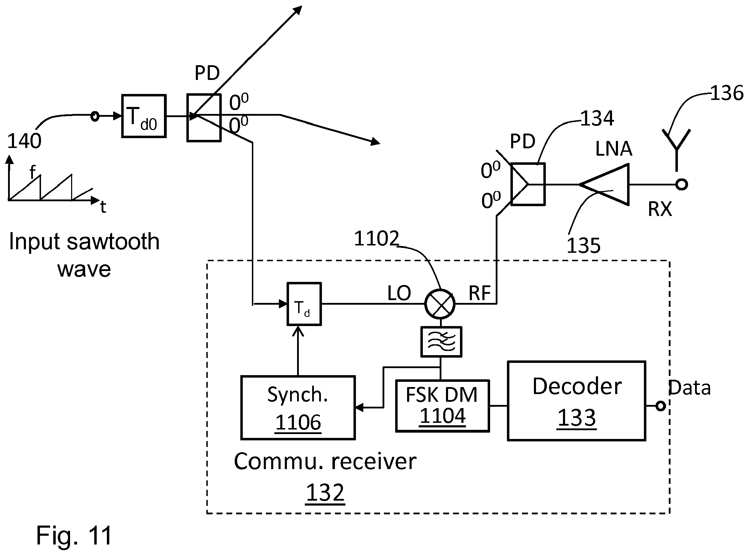

**Figure 11** shows an example embodiment for the communication receiver 132 together with the input signals.

The received chirped FSK is demodulated by a down-converting mixer **1102** with a synchronized sawtooth wave as a LO, as shown in Figure 11, to remove the linear frequency modulation. The obtained FSK signal is then send to a FSK demodulator **1104.**

The synchronization of the received communication signal and the sawtooth wave is realized by tuning delay time Td which is the relative phase of the sawtooth wave as a LO. The delay time $T_d$ is obtained from the spectrum of the down-converted IF signal by a so-called synchronizer **1106.** The details of synchronization scheme for the chirped FSK communication signal may be found in prior art. For example, form a spectrum obtained from the down-converted IF signal, a measured center frequency $f_c$ is obtained. The center frequency fc is related to the time delay $Td$, and the relative phase $(T_s+\tau)$ for the received communication signal, which may be expressed as:

$$f_c = k(T_d - \tau - T_s) \quad (6)$$

$T_d$ may be adjusted until the frequency difference between the received communication signal and the synchronized LO signal reaches the desired intermediated frequency (IF). After mixing with the synchronized LO signal, the frequency chirp is removed. Namely, the chirped FSK pulses become a conventional FSK pulses which will be send to the FSK demodulator 1104.

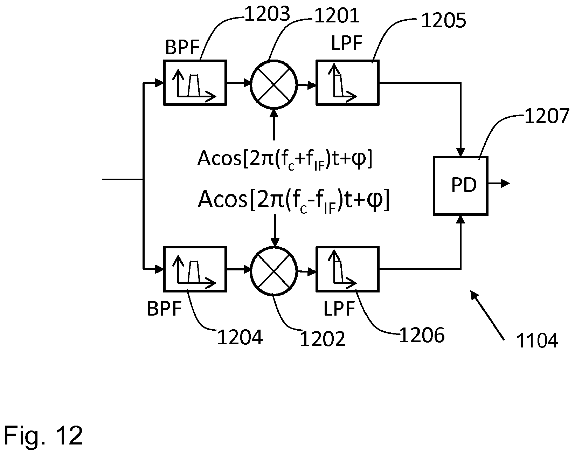

**Figure 12** shows an example embodiment of the FSK demodulator 1104. The FSK demodulator 1104 comprises two DSB mixers, the up one **1201** and the lower one **1202,** as well as two bandpass filters **BPF 1203, 1204,** two low pass filters **LPF 1205, 1206.** Those two DSB mixers 1201/1202 are driven by two LO signals at frequencies of $f_c$+$f_{IF}$ and $f_c$-$f_{IF}$, separately. After low-pass filtering, the outputs from the two DSB mixers are sent to a power detector **1207.** "0" and "1" data are obtained from either the up or the lower DSB mixer and send to the decoder 133, for example an 8b/10b decoder, to decode and get the communication data transmitted from another integrated communication and radar system.

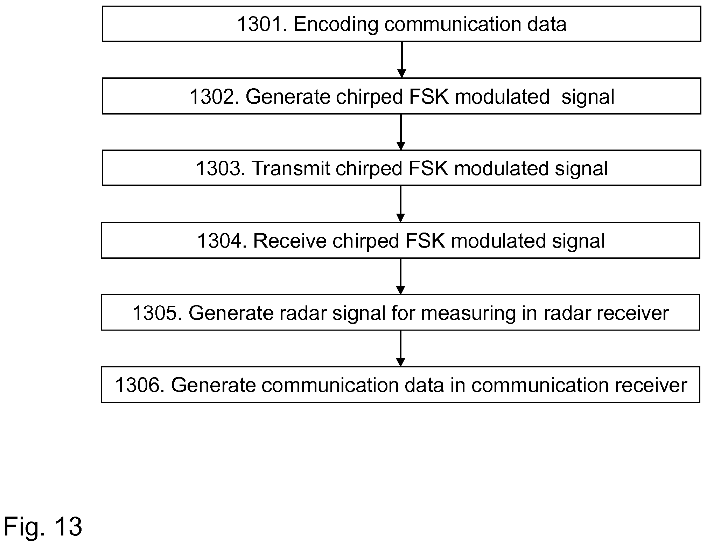

A method performed in the integrated wireless communication and radar system 100 for operating radar and communication mode simultaneously will be described with reference to **Figure 13.** The method comprises the following actions, which actions may be performed in any suitable order.

**Action 1301**

The integrated wireless communication and radar system 100 encodes communication data represented by a binary sequence such that a number of data with value "1" is equal to a number of data with value "0" in the encoded communication data.

**Action 1302**

The integrated wireless communication and radar system 100 generates a chirped FSK modulated signal from the encoded communication data and a chirp radar signal, i.e. a sawtooth wave.

**Action 1303**

The integrated wireless communication and radar system 100 transmits the chirped FSK modulated signal for both communication and radar measurement.

**Action 1304**

The integrated wireless communication and radar system 100 receives a first chirped FSK modulated signal reflected from a reflector and a second chirped FSK modulated signal transmitted from the other wireless communication and radar system.

**Action 1305**

The integrated wireless communication and radar system 100 generates a radar signal for distance and/or speed measurement in a radar receiver by filtering-out the communication signal in the first chirped FSK modulated signal.

**Action 1306**

The integrated wireless communication and radar system 100 obtains the communication data in a communication receiver by demodulating the second chirped FSK modulated signal.

To summarize, in the integrated wireless communication and radar system 100 according to the embodiments herein, a wireless communication system using chirped FSK modulation and a FMCW radar system are integrated in a single system. A chirped FSK modulated signal is used for both communication and radar measurement. Communication data represented by a binary sequence is encoded in the encoder 112, e.g. an 8-bit to 10-bit encoder, such that a number of data with value "1" is equal to a number of data with value "0" in the encoded communication data. The chirped FSK modulated signal is generated from the encoded communication data and a chirp radar signal in the single sideband mixer 114. Consequently, the FSK modulated signal may be removed in the radar receiver 131 by averaging the FSK pulse's frequencies in time domain. In the communication receiver 132, the chirped FSK modulated signal may be demodulated by mixing the received chirped FSK signal with a sawtooth wave synchronized to the received chirped FSK modulated signal, and then using a conventional FSK demodulator 1104. The communication data may be then obtained after decoding, e.g. an 8-bit to 10-bit decoding in the decoder 133.

In this way, the wireless communication and radar functions may work simultaneously, thus, the communication capability, e.g. data rate, is improved, comparing with the time-domain duplex solution. While, the distance/speed measurements can be carried out continuously. In the radar receiver 131, the wireless communication signal is removed in digital domain with a simple average algorithm. This solution is much simpler than the transceiver with circularly polarized microwave. Furthermore, both wireless communication transceiver and radar sensor operate in the same frequency band, so they may share the same packaging, antennas, such as one antenna 118 for transmitter 110, one antenna 136 for both radar and communication receivers 131, 132, as well as a part of microwave circuits, e.g., a power amplifier 116 for transmitter 110, a low noise amplifier 135 for both radar and communication receivers 131, 132 etc..

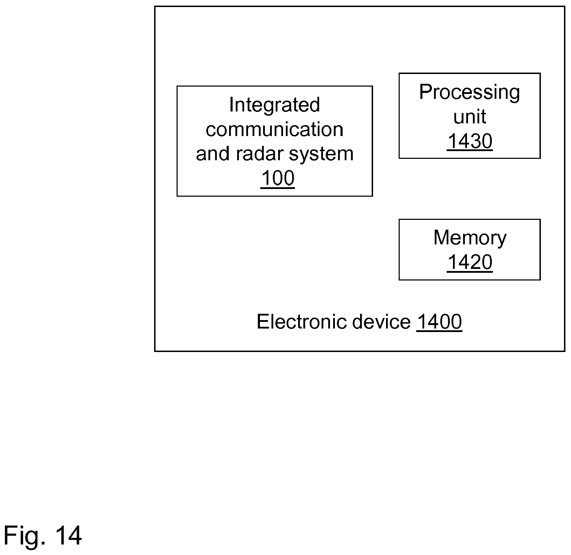

The transmitter 110 and the integrated wireless communication and radar system 100 according to embodiments herein are applicable in an electronic device for vehicle-to-vehicle communication and distance/speed measurements, for unmanned aerial vehicles-to-vehicle, e.g. drone communication and distance/speed measurements, or in sensors, for instance to monitor temperature/smoke/moisture, in health-care and wearable health-care system for obtaining and transmitting vital signs from sensors to repositories or other units. **Figure 14** shows **an electronic device 1400** comprising an integrated wireless communication and radar system 100 according to embodiments herein. The electronic device 1400 may be any distance/speed sensor and communication nodes. The electronic device 1400 may further comprise a **Memory 1420** and a **Processing unit 1430.**

When using the word "comprise" or "comprising" it shall be interpreted as nonlimiting, i.e. meaning "consist at least of".

**Claims**

**1.** An integrated wireless communication and radar system (100) for operating radar and communication mode simultaneously, the system comprising:

a transmitter (110) configured to transmit a chirped FSK modulated signal (120) for both communication and radar measurement, wherein communication data (150), represented by a binary sequence, and a chirp radar signal (140) are combined to form the chirped FSK modulated signal (120), and the transmitter comprises an encoder (112) for encoding the communication data (150) ;

a receiver (130) configured to receive a first chirped FSK modulated signal reflected from a reflector and a second chirped FSK modulated signal transmitted from other wireless communication and radar system, wherein the receiver (130) comprises a radar receiver (131) and a communication receiver (132); and

the radar receiver (131) is configured to filter-out the communication signal in the first chirped FSK modulated signal for distance and/or speed measurement; and

the communication receiver (132) is configured to demodulate the second chirped FSK modulated signal and obtain the communication data;

**characterized in that** the encoder for encoding the communication data is configured such that a number of data with value "1" is equal to a number of data with value "0" in the encoded communication data.

2. The integrated wireless communication and radar system according to claim 1, wherein the encoder is a 8-bit to 10-bit encoder.

3. The integrated wireless communication and radar system (100) according to any one of claims 1-2, wherein the transmitter (110) further comprises a single sideband mixer (114) configured to generate the chirped FSK modulated signal.

4. The integrated wireless communication and radar system (100) according to claim 3, wherein the single sideband mixer (114) comprises:

a first 90-degree hybrid (210) configured to receive an input sawtooth wave and generate quadrature local oscillator signals;

two pair of switchers (S1, S2) coupled to outputs of the first 90-degree hybrid (210);

two double side band mixers (220) coupled to the outputs of the first 90-degree hybrid (210) through the two pair of switchers (S1, S2), wherein states of the two pair of switchers (S1, S2) are controlled by the encoded communication data to exchange phases of the quadrature local oscillator signals to drive the two double side band mixers (220);

a second 90-degree hybrid (230) configured to receive an intermediate frequency, IF, signal and generate quadrature IF signals for the two double side band mixers (220); and

a power combiner (240) coupled to outputs of the two double side band mixers (220) to combine the outputs of the two double side band mixers (220) and thereby generate the chirped FSK modulated signal (120).

5. The integrated wireless communication and radar system (100) according to any one of claims 1-4, wherein the transmitter (110) further comprises a power amplifier (116) to amplifier the chirped FSK modulated signal and an antenna (118) to transmit the chirped FSK modulated signal.

6. The integrated wireless communication and radar system (100) according to any one of claims 1-5, wherein the radar receiver (131) comprises an image reject mixer (501) configured to mix the first chirped FSK modulated signal with the input sawtooth wave.

7. The integrated wireless communication and radar system (100) according to claim 6, wherein the radar receiver (131) further comprises a low pass filter (502), a power detector (503), an analog-to-digital converter (504) and a baseband processor (505), wherein the encoded communication data is removed by averaging frequencies of FSK pulses in time domain in the baseband processor (505).

8. The integrated wireless communication and radar system (100) according to any one of claims 1-7, wherein the communication receiver (132) comprises a double sideband down-converter mixer (1102) configured to mix the second chirped FSK modulated signal, with a sawtooth wave synchronized to the second chirped FSK modulated signal and generate a down-converted FSK modulated communication signal.

9. The integrated wireless communication and radar system (100) according to claim 8, wherein the communication receiver (132) further comprises a FSK demodulator configured to demodulate the down-converted FSK modulated communication signal and generate a demodulated communication signal, and a decoder (133) configured to decode the demodulated communication signal and obtain the communication data.

10. The integrated wireless communication and radar system (100) according to any one of claims 1-9, wherein the receiver (130) further comprises an antenna (136) to receive the chirped FSK modulated signals, a low noise amplifier (135) coupled to the antenna and a power divider (134) coupled to the low noise amplifier (135), wherein the communication receiver (132) and radar receiver (131) are coupled to the power divider (134) such that the antenna (136) and low noise amplifier (135) are shared by the communication receiver (132) and radar receiver (131).

11. A transmitter (110) for operating radar and communication mode simultaneously comprising:
an encoder (112) for encoding communication data represented by a binary sequence such that a number of data with value "1" is equal to a number of data with value "0" in the encoded communication data; and the transmitter is configured to:

generate a chirped FSK modulated signal from the encoded communication data and a chirp radar signal and transmit the chirped FSK modulated signal for both communication and radar measurement.

12. The transmitter according to claim 11, wherein the encoder is a 8-bit to 10-bit encoder.

13. The transmitter according to any one of claims 11-12, wherein the transmitter further comprises a single sideband mixer (114) configured to generate the chirped FSK modulated signal.

14. The transmitter according to claim 13, wherein the single sideband mixer (114) comprises:

a first 90-degree hybrid (210) configured to receive an input sawtooth wave and generate quadrature local oscillator signals;
two pair of switchers (S1, S2) coupled to outputs of the first 90-degree hybrid (210);
two double side band mixers (220) coupled to the outputs of the first 90-degree hybrid (210) through the two pair of switchers (S1, S2), wherein states of the two pair of switchers (S1, S2) are controlled by the encoded communication data to exchange phases of the quadrature local oscillator signals to drive the two double side band mixers (220);
a second 90-degree hybrid (230) configured to receive an intermediate frequency, IF, signal and generate quadrature IF signals for the two double side band mixers (220); and
a power combiner (240) coupled to outputs of the two double side band mixers (220) to combine the outputs of the two double side band mixers (220) and thereby generate the chirped FSK modulated signal.

15. The transmitter according to any one of claims 11-14, wherein the transmitter (110) further comprises a power amplifier (116) to amplifier the chirped FSK modulated signal and an antenna (118) to transmit the chirped FSK modulated signal.

16. A method performed in an integrated wireless communication and radar system for operating radar and communication mode simultaneously, comprising:

encoding (1301) communication data represented by a binary sequence such that a number of data with value "1" is equal to a number of data with value "0" in the encoded communication data;
generating (1302) a chirped FSK modulated signal from the encoded communication data and a chirp radar signal; and
transmitting (1303) the chirped FSK modulated signal for both communication and radar measurement.

17. The method according to claim 16, further comprising:

receiving (1304) a first chirped FSK modulated signal reflected from a reflector and a second chirped FSK modulated signal transmitted from other wireless communication and radar system;
generating (1305) a radar signal for distance and/or speed measurement in a radar receiver by filtering-out the communication signal in the first chirped FSK modulated signal; and
generating (1306) the communication data in a communication receiver by demodulating the second chirped FSK modulated signal.

18. An electronic device (1400) comprising an integrated wireless communication and radar system (100) according to any one of the claims 1-10.

**Patentansprüche**

1. Integriertes drahtloses Kommunikations- und Radarsystem (100) zum gleichzeitigen Betreiben eines Radar- und Kommunikationsmodus, das System umfassend:

   einen Sender (110), der zum Übertragen eines gechirpten modulierten FSK-Signals (120) für sowohl Kommunikation als auch Radarmessung ausgelegt ist, wobei Kommunikationsdaten (150), die durch eine Binärdateisequenz dargestellt sind, und ein Chirp-Radarsignal (140) kombiniert werden, um das gechirpte FSK-modulierte Signal (120) zu bilden, und der Sender einen Encoder (112) zum Codieren der Kommunikationsdaten (150) umfasst;
   einen Empfänger (130), der zum Empfangen eines ersten gechirpten FSK-modulierten Signals, das von einem Reflektor reflektiert wird, und eines zweiten gechirpten FSK-modulierten Signals, das von einem anderen drahtlosen Kommunikations- und Radarsystem übertragen wird, ausgelegt ist, wobei der Empfänger (130) einen Radarempfänger (131) und einen Kommunikationsempfänger (132) umfasst; und
   wobei der Radarempfänger (131) zum Herausfiltern des Kommunikationssignals in dem ersten gechirpten FSK-modulierten Signal zur Entfernungs- und/oder Geschwindigkeitsmessung ausgelegt ist und
   wobei der Kommunikationsempfänger (132) zum Demodulieren des zweiten gechirpten FSK-modulierten Signals und Erhalten der Kommunikationsdaten ausgelegt ist;
   **dadurch gekennzeichnet, dass** der Encoder zum Codieren der Kommunikationsdaten derart ausgelegt ist, dass eine Anzahl von Daten mit dem Wert "1" gleich einer Anzahl von Daten mit dem Wert "0" in den codierten Kommunikationsdaten ist.

2. Integriertes drahtloses Kommunikations- und Radarsystem nach Anspruch 1, wobei der Encoder ein 8-Bit bis 10-Bit-Encoder ist.

3. Integriertes drahtloses Kommunikations- und Radarsystem (100) nach einem der Ansprüche 1-2, wobei der Sender (110) weiter einen Einseitenbandmischer (114) umfasst, der zum Erzeugen des gechirpten FSK-modulierten Signals ausgelegt ist.

4. Integriertes drahtloses Kommunikations- und Radarsystem (100) nach Anspruch 3, wobei der Einseitenbandmischer (114) umfasst:

   ein erstes 90-Grad-Hybrid (210), das zum Empfangen einer Eingangssägezahnwelle und Erzeugen von Quadraturlokaloszillatorsignalen ausgelegt ist;
   zwei Paare von Schaltern (S1, S2), die an Ausgänge des ersten 90-Grad-Hybrids (210) gekoppelt sind;
   zwei Zweiseitenbandmischer (220), die durch die zwei Paare von Schaltern (S1, S2) an die Ausgänge des ersten 90-Grad-Hybrids (210) gekoppelt sind, wobei Zustände der zwei Paare von Schaltern (S1, S2) durch die codierten Kommunikationsdaten gesteuert werden, um Phasen der Quadraturlokaloszillatorsignale auszutauschen, um die zwei Zweiseitenbandmischer (220) anzusteuern;
   ein zweites 90-Grad-Hybrid (230), das zum Empfangen eines Zwischenfrequenzsignals, IF-Signals, und Erzeugen von Quadratur-IF-Signalen für die zwei Zweiseitenbandmischer (220) ausgelegt ist; und
   einen Leistungskombinator (240), der an Ausgänge der zwei Zweiseitenbandmischer (220) gekoppelt ist, um die Ausgänge der zwei Zweiseitenbandmischer (220) zu kombinieren und dadurch das gechirpte FSK-modulierte Signal (120) zu erzeugen.

5. Integriertes drahtloses Kommunikations- und Radarsystem (100) nach einem der Ansprüche 1-4, wobei der Sender (110) weiter einen Leistungsverstärker (116) zum Verstärker des gechirpten FSK-modulierten Signals und eine Antenne (118) zum Übertragen des gechirpten FSK-modulierten Signals umfasst.

6. Integriertes drahtloses Kommunikations- und Radarsystem (100) nach einem der Ansprüche 1-5, wobei der Radarempfänger (131) einen Mischer mit Spiegelfrequenzunterdrückung (501) umfasst, der zum Mischen des ersten gechirpten FSK-modulierten Signals mit der Eingangssägezahnwelle ausgelegt ist.

7. Integriertes drahtloses Kommunikations- und Radarsystem (100) nach Anspruch 6, wobei der Radarempfänger (131) weiter ein Tiefpassfilter (502), einen Leistungsdetektor (503), einen Analog-Digital-Wandler (504) und einen Basisbandprozessor (505) umfasst, wobei die codierten Kommunikationsdaten durch Mitteln von Frequenzen von FSK-Impulsen in der Zeitdomäne in dem Basisbandprozessor (505) entfernt werden.

8. Integriertes drahtloses Kommunikations- und Radarsystem (100) nach einem der Ansprüche 1-7, wobei der Kommunikationsempfänger (132) einen Zweiseitenbandabwärtswandlungsmischer (1102) umfasst, der zum Mischen des zweiten gechirpten FSK-modulierten Signals mit einer auf das zweite gechirpte FSK-modulierte Signal synchronisierten Sägezahnwelle und Erzeugen eines abwärtsgewandelten FSK-modulierten Kommunikationssignals ausgelegt ist.

9. Integriertes drahtloses Kommunikations- und Radarsystem (100) nach Anspruch 8, wobei der Kommunikationsempfänger (132) weiter einen FSK-Demodulator (1104), der zum Demodulieren des abwärtsgewandelten FSK-modulierten Kommunikationssignals und Erzeugen eines demodulierten Kommunikationssignals ausgelegt ist, und einen Decoder (133), der zum Decodieren des demodulierten Kommunikationssignals und Erhalten der Kommunikationsdaten ausgelegt ist, umfasst.

10. Integriertes drahtloses Kommunikations- und Radarsystem (100) nach einem der Ansprüche 1-9, wobei der Empfänger (130) weiter eine Antenne (136) zum Empfangen der gechirpten FSK-modulierten Signale, einen rauscharmen Verstärker (135), der an die Antenne gekoppelt ist, und einen Leistungsteiler (134), der an den rauscharmen Verstärker (135) gekoppelt ist, umfasst, wobei der Kommunikationsempfänger (132) und der Radarempfänger (131) derart an den Leistungsteiler (134) gekoppelt sind, dass die Antenne (136) und der rauscharme Verstärker (135) durch den Kommunikationsempfänger (132) und den Radarempfänger (131) gemeinsam genutzt werden.

11. Sender (110) zum gleichzeitigen Betreiben eines Radar- und Kommunikationsmodus, umfassend:
einen Encoder (112) zum Codieren von Kommunikationsdaten, die durch eine Binärdateisequenz dargestellt sind, derart, dass eine Anzahl von Daten mit dem Wert "1" gleich einer Anzahl von Daten mit dem Wert "0" in den codierten Kommunikationsdaten ist; und wobei der Sender ausgelegt ist zum:

Erzeugen eines gechirpten FSK-modulierten Signals aus den codierten Kommunikationsdaten und einem Chirp-Radarsignal und
Übertragen des gechirpten FSK-modulierten Signals für sowohl Kommunikation als auch Radarmessung.

12. Sender nach Anspruch 11, wobei der Encoder ein 8-Bit bis 10-Bit-Encoder ist.

13. Sender nach einem der Ansprüche 11-12, wobei der Sender weiter einen Einseitenbandmischer (114) umfasst, der zum Erzeugen des gechirpten FSK-modulierten Signals ausgelegt ist.

14. Sender nach Anspruch 13, wobei der Einseitenbandmischer (114) umfasst:

ein erstes 90-Grad-Hybrid (210), das zum Empfangen einer Eingangssägezahnwelle und Erzeugen von Quadraturlokaloszillatorsignalen ausgelegt ist;
zwei Paare von Schaltern (S1, S2), die an Ausgänge des ersten 90-Grad-Hybrids (210) gekoppelt sind;
zwei Zweiseitenbandmischer (220), die durch die zwei Paare von Schaltern (S1, S2) an die Ausgänge des ersten 90-Grad-Hybrids (210) gekoppelt sind, wobei Zustände der zwei Paare von Schaltern (S1, S2) durch die codierten Kommunikationsdaten gesteuert werden, um Phasen der Quadraturlokaloszillatorsignale auszutauschen, um die zwei Zweiseitenbandmischer (220) anzusteuern;
ein zweites 90-Grad-Hybrid (230), das zum Empfangen eines Zwischenfrequenzsignals, IF-Signals, und Erzeugen von Quadratur-IF-Signalen für die zwei Zweiseitenbandmischer (220) ausgelegt ist; und
einen Leistungskombinator (240), der an Ausgänge der zwei Zweiseitenbandmischer (220) gekoppelt ist, um die Ausgänge der zwei Zweiseitenbandmischer (220) zu kombinieren und dadurch das gechirpte FSK-modulierte Signal zu erzeugen.

15. Sender nach einem der Ansprüche 11-14, wobei der Sender (110) weiter einen Leistungsverstärker (116) zum Verstärker des gechirpten FSK-modulierten Signals und eine Antenne (118) zum Übertragen des gechirpten FSK-modulierten Signals umfasst.

16. Verfahren, das in einem integrierten drahtlosen Kommunikations- und Radarsystem zum gleichzeitigen Betreiben eines Radar- und Kommunikationsmodus durchgeführt wird, umfassend:

Codieren (1301) von Kommunikationsdaten, die durch eine Binärdateisequenz dargestellt sind, derart, dass eine Anzahl von Daten mit dem Wert "1" gleich einer Anzahl von Daten mit dem Wert "0" in den codierten Kommunikationsdaten ist;

Erzeugen (1302) eines gechirpten FSK-modulierten Signals aus den codierten Kommunikationsdaten und einem Chirp-Radarsignal und

Übertragen (1303) des gechirpten FSK-modulierten Signals für sowohl Kommunikation als auch Radarmessung.

**17.** Verfahren nach Anspruch 16, weiter umfassend:

Empfangen (1304) eines ersten gechirpten FSK-modulierten Signals, das von einem Reflektor reflektiert wird, und eines zweiten gechirpten FSK-modulierten Signals, das von einem anderen drahtlosen Kommunikations- und Radarsystem übertragen wird;

Erzeugen (1305) eines Radarsignals zur Entfernungs- und/oder Geschwindigkeitsmessung in einem Radarempfänger durch Herausfiltern des Kommunikationssignals in dem ersten gechirpten FSK-modulierten Signal und

Erzeugen (1306) der Kommunikationsdaten in einem Kommunikationsempfänger durch Demodulieren des zweiten gechirpten FSK-modulierten Signals.

**18.** Elektronisches Gerät (1400), umfassend ein integriertes drahtloses Kommunikations- und Radarsystem (100) nach einem der Ansprüche 1-10.

## Revendications

**1.** Système de communication et radar sans fil intégré (100) pour faire fonctionner un mode radar et communication simultanément, le système comprenant :

un émetteur (110) configuré pour émettre un signal modulé FSK à compression d'impulsions (120) pour à la fois une communication et une mesure radar, dans lequel des données de communication (150), représentées par une séquence binaire, et un signal radar à compression d'impulsions (140) sont combinés pour former le signal modulé FSK à compression d'impulsions (120), et l'émetteur comprend un codeur (112) pour coder les données de communication (150) ;

un récepteur (130) configuré pour recevoir un premier signal modulé FSK à compression d'impulsions réfléchi depuis un réflecteur et un second signal modulé FSK à compression d'impulsions émis depuis un autre système de communication et radar sans fil, dans lequel le récepteur (130) comprend un récepteur radar (131) et un récepteur de communication (132) ; et

le récepteur radar (131) est configuré pour filtrer le signal de communication dans le premier signal modulé FSK à compression d'impulsions pour une mesure de distance et/ou de vitesse ; et

le récepteur de communication (132) est configuré pour démoduler le second signal modulé FSK à compression d'impulsions et obtenir les données de communication ;

**caractérisé en ce que** le codeur pour coder les données de communication est configuré de telle sorte qu'un certain nombre de données avec la valeur « 1 » est égal à un certain nombre de données avec la valeur « 0 » dans les données de communication codées.

**2.** Système de communication et radar sans fil intégré selon la revendication 1, dans lequel le codeur est un codeur 8 bits à 10 bits.

**3.** Système de communication et radar sans fil intégré (100) selon l'une quelconque des revendications 1-2, dans lequel l'émetteur (110) comprend en outre un mélangeur à bande latérale unique (114) configuré pour générer le signal modulé FSK à compression d'impulsions.

**4.** Système de communication et radar sans fil intégré (100) selon la revendication 3, dans lequel le mélangeur à bande latérale unique (114) comprend :

un premier coupleur hybride à 90 degrés (210) configuré pour recevoir une onde en dents de scie d'entrée et générer des signaux d'oscillateur local en quadrature ;

deux paires de commutateurs (S1, S2) couplés à des sorties du premier coupleur hybride à 90 degrés (210) ;

deux mélangeurs à bande latérale double (220) couplés aux sorties du premier coupleur hybride à 90 degrés (210) à travers les deux paires de commutateurs (S1, S2), dans lesquels des états des deux paires de commutateurs (S1, S2) sont commandés par les données de communication codées pour échanger des phases des signaux d'oscillateur local en quadrature pour piloter les deux mélangeurs à bande latérale double (220) ;

un second coupleur hybride à 90 degrés (230) configuré pour recevoir un signal à fréquence intermédiaire, IF, et générer des signaux IF en quadrature pour les deux mélangeurs à bande latérale double (220) ; et
un combinateur de puissance (240) couplé à des sorties des deux mélangeurs à bande latérale double (220) pour combiner les sorties des deux mélangeurs à bande latérale double (220) et générer ainsi le signal modulé FSK à compression d'impulsions (120).

5. Système de communication et radar sans fil intégré (100) selon l'une quelconque des revendications 1-4, dans lequel l'émetteur (110) comprend en outre un amplificateur de puissance (116) pour amplificateur le signal modulé FSK à compression d'impulsions et une antenne (118) pour émettre le signal modulé FSK à compression d'impulsions.

6. Système de communication et radar sans fil intégré (100) selon l'une quelconque des revendications 1-5, dans lequel le récepteur radar (131) comprend un mélangeur à réjection d'images (501) configuré pour mélanger le premier signal modulé FSK à compression d'impulsions avec l'onde en dents de scie d'entrée.

7. Système de communication et radar sans fil intégré (100) selon la revendication 6, dans lequel le récepteur radar (131) comprend en outre un filtre passe-bas (502), un détecteur de puissance (503), un convertisseur analogique-numérique (504) et un processeur de bande de base (505), dans lequel les données de communication codées sont enlevées en moyennant des fréquences d'impulsions FSK dans le domaine temporel dans le processeur de bande de base (505).

8. Système de communication et radar sans fil intégré (100) selon l'une quelconque des revendications 1-7, dans lequel le récepteur de communication (132) comprend un mélangeur abaisseur de fréquence à bande latérale double (1102) configuré pour mélanger le second signal modulé FSK à compression d'impulsions, avec une onde en dents de scie synchronisée au second signal modulé FSK à compression d'impulsions et générer un signal de communication modulé FSK abaissé en fréquence.

9. Système de communication et radar sans fil intégré (100) selon la revendication 8, dans lequel le récepteur de communication (132) comprend en outre un démodulateur FSK (1104) configuré pour démoduler le signal de communication modulé FSK abaissé en fréquence et générer un signal de communication démodulé, et un décodeur (133) configuré pour décoder le signal de communication démodulé et obtenir les données de communication.

10. Système de communication et radar sans fil intégré (100) selon l'une quelconque des revendications 1-9, dans lequel le récepteur (130) comprend en outre une antenne (136) pour recevoir les signaux modulés FSK à compression d'impulsions, un amplificateur à faible bruit (135) couplé à l'antenne et un diviseur de puissance (134) couplé à l'amplificateur à faible bruit (135), dans lequel les récepteur de communication (132) et récepteur radar (131) sont couplés au diviseur de puissance (134) de telle sorte que les antenne (136) et amplificateur à faible bruit (135) sont partagés par les récepteur de communication (132) et récepteur radar (131).

11. Emetteur (110) pour faire fonctionner un mode radar et communication simultanément comprenant :
un codeur (112) pour coder des données de communication représentées par une séquence binaire de telle sorte qu'un certain nombre de données avec la valeur « 1 » est égal à un certain nombre de données avec la valeur « 0 » dans les données de communication codées ; et l'émetteur est configuré pour :

générer un signal modulé FSK à compression d'impulsions à partir des données de communication codées et d'un signal radar à compression d'impulsions et
émettre le signal modulé FSK à compression d'impulsions pour à la fois une communication et une mesure radar.

12. Emetteur selon la revendication 11, dans lequel le codeur est un codeur 8 bits à 10 bits.

13. Emetteur selon l'une quelconque des revendications 11-12, dans lequel l'émetteur comprend en outre un mélangeur à bande latérale unique (114) configuré pour générer le signal modulé FSK à compression d'impulsions.

14. Emetteur selon la revendication 13, dans lequel le mélangeur à bande latérale unique (114) comprend :

un premier coupleur hybride à 90 degrés (210) configuré pour recevoir une onde en dents de scie d'entrée et générer des signaux d'oscillateur local en quadrature ;
deux paires de commutateurs (S1, S2) couplés à des sorties du premier coupleur hybride à 90 degrés (210) ;

deux mélangeurs à bande latérale double (220) couplés aux sorties du premier coupleur hybride à 90 degrés (210) à travers les deux paires de commutateurs (S1, S2), dans lesquels des états des deux paires de commutateurs (S1, S2) sont commandés par les données de communication codées pour échanger des phases des signaux d'oscillateur local en quadrature pour piloter les deux mélangeurs à bande latérale double (220) ; un second coupleur hybride à 90 degrés (230) configuré pour recevoir un signal à fréquence intermédiaire, IF, et générer des signaux IF en quadrature pour les deux mélangeurs à bande latérale double (220) ; et un combinateur de puissance (240) couplé à des sorties des deux mélangeurs à bande latérale double (220) pour combiner les sorties des deux mélangeurs à bande latérale double (220) et générer ainsi le signal modulé FSK à compression d'impulsions.

**15.** Emetteur selon l'une quelconque des revendications 11-14, dans lequel l'émetteur (110) comprend en outre un amplificateur de puissance (116) pour amplificateur le signal modulé FSK à compression d'impulsions et une antenne (118) pour émettre le signal modulé FSK à compression d'impulsions.

**16.** Procédé effectué dans un système de communication et radar sans fil intégré pour faire fonctionner un mode radar et communication simultanément, comprenant :

un codage (1301) de données de communication représentées par une séquence binaire de telle sorte qu'un certain nombre de données avec la valeur « 1 » est égal à un certain nombre de données avec la valeur « 0 » dans les données de communication codées ; une génération (1302) d'un signal modulé FSK à compression d'impulsions à partir des données de communication codées et d'un signal radar à compression d'impulsions ; et une émission (1303) du signal modulé FSK à compression d'impulsions pour à la fois une communication et une mesure radar.

**17.** Procédé selon la revendication 16, comprenant en outre :

une réception (1304) d'un premier signal modulé FSK à compression d'impulsions réfléchi depuis un réflecteur et d'un second signal modulé FSK à compression d'impulsions émis depuis un autre système de communication et radar sans fil ; une génération (1305) d'un signal radar pour une mesure de distance et/ou de vitesse dans un récepteur radar en filtrant le signal de communication dans le premier signal modulé FSK à compression d'impulsions ; et une génération (1306) des données de communication dans un récepteur de communication en démodulant le second signal modulé FSK à compression d'impulsions.

**18.** Dispositif électronique (1400) comprenant un système de communication et radar sans fil intégré (100) selon l'une quelconque des revendications 1-10.

Fig. 1

Fig. 2

EP 3 673 286 B1

Fig. 3

Fig. 4

Fig. 5

Fig. 6

Fig. 7

Fig. 8

Fig. 9

Fig. 10

EP 3 673 286 B1

Fig. 11

Fig. 12

```
┌─────────────────────────────────────────────────────────────┐
│            1301. Encoding communication data                │
└─────────────────────────────────────────────────────────────┘
                              │
                              ▼
┌─────────────────────────────────────────────────────────────┐
│          1302. Generate chirped FSK modulated  signal       │
└─────────────────────────────────────────────────────────────┘
                              │
                              ▼
┌─────────────────────────────────────────────────────────────┐
│          1303. Transmit chirped FSK modulated signal        │
└─────────────────────────────────────────────────────────────┘
                              │
                              ▼
┌─────────────────────────────────────────────────────────────┐
│          1304. Receive chirped FSK modulated signal         │
└─────────────────────────────────────────────────────────────┘
                              │
                              ▼
┌─────────────────────────────────────────────────────────────┐
│    1305. Generate radar signal for measuring in radar receiver │
└─────────────────────────────────────────────────────────────┘
                              │
                              ▼
┌─────────────────────────────────────────────────────────────┐
│  1306. Generate communication data in communication receiver │
└─────────────────────────────────────────────────────────────┘
```

Fig. 13

```
┌─────────────────────────────────────────────────┐
│                                                 │
│  ┌───────────────────┐   ┌──────────────────┐   │
│  │    Integrated     │   │    Processing    │   │
│  │   communication   │   │       unit       │   │
│  │  and radar system │   │       1430       │   │
│  │        100        │   └──────────────────┘   │
│  └───────────────────┘                          │
│                          ┌──────────────────┐   │
│                          │     Memory       │   │
│                          │      1420        │   │
│                          └──────────────────┘   │
│                                                 │
│          Electronic device 1400                 │
└─────────────────────────────────────────────────┘
```

Fig. 14

**EP 3 673 286 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105182323

**Non-patent literature cited in the description**

- **SCHEIBLHOFER WERNER et al.** *Method to embed a data-link on FMCW chirps for communication between cooperative 77-GHz radar stations*

- **G.N. SADDIK ; R.S. SINGH ; E.R. BROWN.** Ultra-wideband multifunctional communications/radar system. *IEEE Trans. Microw. Theory Tech.,* 2007, vol. 55 (7), 1431-1437